# FASCICULE DE BREVET EUROPEEN

(11) **EP 0 723 508 B1**
(45) Date de publication et mention de la délivrance du brevet: **10.09.1997**
(21) Numéro de dépôt: 94928940.9
(22) Date de dépôt: 04.10.1994
(51) Int. Cl.: B60T 13/72

(54) **SERVOMOTEUR DOTE D'UN SOUFFLET A MONTAGE RAPIDE**
SERVOMOTOR, AUSGESTATTET MIT SCHNELLMONTIERTEM FALTENBALG
SERVOMOTOR PROVIDED WITH A QUICK MOUNTING BELLOW

(30) Priorité: 22.10.1993 FR 9312600
(43) Date de publication de la demande: 31.07.1996
(73) Titulaire: Bosch Systemes de Freinage, 93700 Drancy (FR)
(72) Inventeur: CASTEL, Philippe, F-75005 Paris (FR); PRESSACO, Pierre, F-93120 La Courneuve (FR); DEBUIRE, André, F-93700 Drancy (FR)
(74) Mandataire: Bentz, Jean-Paul
(86) Numéro de dépôt international: FR9401152
(87) Numéro de publication internationale: WO9511151

(56) Documents cités:
- EP-A- 0 514 238
- GB-A- 2 084 274

## Description

La présente invention concerne un servomoteur à dépression, comprenant une enveloppe rigide dont l'intérieur est partagé en au moins une première et une seconde chambres au moyen d'au moins une paroi, un 'conduit' tubulaire traversant la première chambre, présentant une première extrémité solidaire de la paroi, et servant à faire communiquer de façon étanche la seconde chambre avec l'extérieur de l'enveloppe, le conduit présentant, à sa première extrémité, un rebord annulaire interne qui en réduit le diamètre, la paroi présentant un orifice constitué par une extrémité ouverte d'une partie tubulaire , et le servomoteur comprenant une pièce de maintien essentiellement constituée par un tube et coopérant avec le rebord interne du conduit pour assurer une liaison étanche entre la seconde chambre et l'intérieur du conduit.

Un servomoteur de ce type est par exemple décrit dans le brevet US 5 176 065, incorporé à la présente description par référence.

Dans les dispositifs de ce type, qui sont produits en grande série, le montage du soufflet présente une difficulté majeure, responsable d'un coût de production élevé et d'un temps de fabrication important.

La présente invention se situe dans ce contexte et vise à proposer un servomoteur équipé de moyens simples et peu coûteux, mais permettant néanmoins le montage rapide du soufflet.

A cette fin, le servomoteur de l'invention, par ailleurs conforme au préambule ci-dessus, est essentiellement caractérisé en ce que en ce que la partie tubulaire est formée par ladite paroi et la pièce de maintien présente un diamètre externe au plus égal au diamètre interne du conduit pris à distance du rebord annulaire de ce dernier, cette pièce de maintien présentant une première extrémité dotée d'une élasticité radiale lui permettant de se maintenir sur la partie tubulaire de la paroi avec l'aide d'au moins une butée, et une seconde extrémité coopérant avec la paroi pour enserrer le rebord interne du conduit et lui faire remplir la fonction d'un joint d'étanchéité.

De préférence, la première extrémité de la pièce de maintien prend alors appui sur la partie tubulaire de la paroi au voisinage du bord de l'orifice et la première extrémité de cette pièce présente des découpes axiales propres à la rendre élastiquement expansible dans une direction radiale.

Par exemple, la pièce de maintien traverse par sa première extrémité la première extrémité du conduit et l'orifice de la paroi, et la seconde extrémité de la pièce de maintien forme une collerette qui sollicite le rebord interne du conduit contre la face de la paroi qui est tournée vers la première chambre.

Dans ce cas, la butée est par exemple formée sur la première extrémité de la pièce de maintien et adopte la forme d'une saillie coopérant avec le bord de l'orifice pour empêcher le retrait de cette pièce après son engagement dans l'orifice.

Selon un autre mode de réalisation possible, la pièce de maintien est enfilée sur la partie tubulaire de la paroi, la butée étant alors formée sur cette partie tubulaire. Dans le mode de réalisation préféré de l'invention, la pièce de maintien est métallique et par exemple réalisée en acier, et le conduit tubulaire adopte avantageusement la forme d'un soufflet sensiblement rectiligne.

Dans tous ces cas, il est avantageux que la partie tubulaire de la paroi se raccorde au reste de la paroi par un forme évasée.

Selon encore un autre mode de réalisation possible, la pièce de maintien forme la partie tubulaire et traverse ladite paroi.

D'autres caractéristiques et avantages de l'invention ressortiront clairement de la description qui en est faite ci-après, à titre indicatif et nullement limitatif, en référence aux dessins annexés, sur lesquels :
- la Figure 1 est une vue schématique en coupe partielle d'un servomoteur conforme à un premier mode de réalisation de l'invention;
- la Figure 2 est une vue agrandie en perspective de la pièce de maintien visible sur la Figure 1;
- la Figure 3 est une vue en coupe d'un détail d'un servomoteur conforme à un second mode de réalisation de l'invention;
- la Figure 4 est une vue en coupe de la pièce de maintien visible sur la Figure 3; et
- la Figure 5 est une vue en coupe d'un détail d'un servomoteur conforme à un troisième mode de réalisation de l'invention.

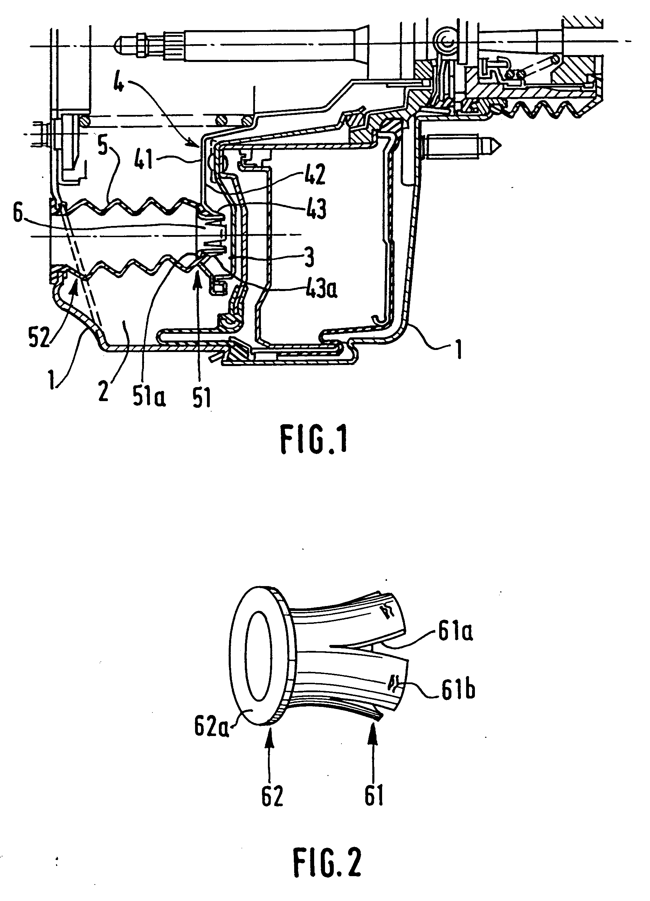

Comme le montre la figure 1, l'invention concerne le montage d'un conduit, adoptant de préférence la forme d'un soufflet, dans un servomoteur pneumatique d''assistance au freinage susceptible d'être actionné de façon automatique.

Un tel servomoteur comprend classiquement une enveloppe rigide 1 dont l'intérieur est partagé en au moins une première et une seconde chambres 2 et 3 au moyen d'au moins une paroi 4, et un soufflet tubulaire 5 sensiblement rectiligne traversant la première chambre 2, présentant une première extrémité 51 solidaire de la paroi 4, et servant à faire communiquer de façon étanche la seconde chambre 3 avec l'extérieur de l'enveloppe 1.

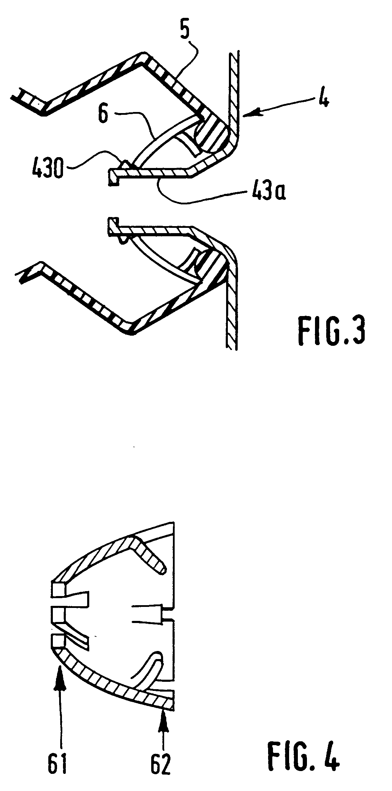

Selon les deux premiers modes de réalisation de l'invention (figures 1 et 3), le soufflet 5 est appliqué par sa première extrémité 51 contre une première 41 des deux faces 41 et 42 de la paroi 4, et autour d'un orifice 43 pratiqué dans celle-ci.

Le soufflet 5 présente, à sa première extrémité 51, un rebord annulaire interne 51a qui en réduit le diamètre, et le servomoteur comprend en outre une pièce de maintien 6.

Comme le montre la figure 2 qui illustre un premier mode de réalisation de l'invention, la pièce de maintien 6 est essentiellement constituée par un tube dont une première extrémité 61 présente des découpes axiales 61a propres à rendre ce tube élastiquement expansible dans une direction radiale et dont une seconde extrémité 62 forme une collerette 62a.

La pièce de maintien 6 est introduite dans le soufflet à partir de la seconde extrémité 52 de ce dernier, depuis l'extérieur de l'enveloppe 1, et présente pour ce faire un diamètre externe au plus égal au diamètre interne du soufflet 5, pris à distance du rebord annulaire 51a de ce dernier.

Comme le montre à nouveau la figure 1, la pièce de maintien 6 traverse par sa première extrémité 61 la première extrémité 51 du soufflet 5 et l'orifice 43 pratiqué dans la paroi 4 pour prendre appui sur le bord de l'orifice 43, solliciter la collerette 62a contre le rebord interne 51a du soufflet, et appliquer ce rebord contre la première face 41 de la paroi 4.

Comme le montre encore la figure 1, l'orifice 43 est formé par une extrémité ouverte (à droite sur la figure) d'une partie tubulaire 43a de la paroi dont l'autre extrémité (à gauche de cette partie tubulaire sur la figure) se raccorde au reste de la paroi 4, en s'évasant, du côté du soufflet 5.

Comme le montre la figure 2, la première extrémité 61 de la pièce de maintien 6 présente avantageusement des saillies telles que 61b qui forment butées et coopèrent avec le bord de l'orifice 43 pour empêcher le retrait de cette pièce 6 après son engagement dans l'orifice.

Dans le second mode de réalisation illustré à la figure 3, la pièce de maintien 6 est enfilée sur la partie tubulaire 43a de la paroi, qui pointe cette fois vers le soufflet, et sur laquelle est formée une ou plusieurs butées telles que 430 destinées à retenir la pièce de maintien 6.

Cette dernière, illustrée à la figure 4, présente un plus grand diamètre interne à sa seconde extrémité 62 qu'à sa première extrémité 61 pour pouvoir appliquer le rebord interne 51a du soufflet contre la partie évasée raccordant la partie tubulaire 43a de la paroi au reste de cette dernière.

Dans les modes de réalisation précédemment décrits, la pièce de maintien 6 est de préférence métallique et par exemple en acier.

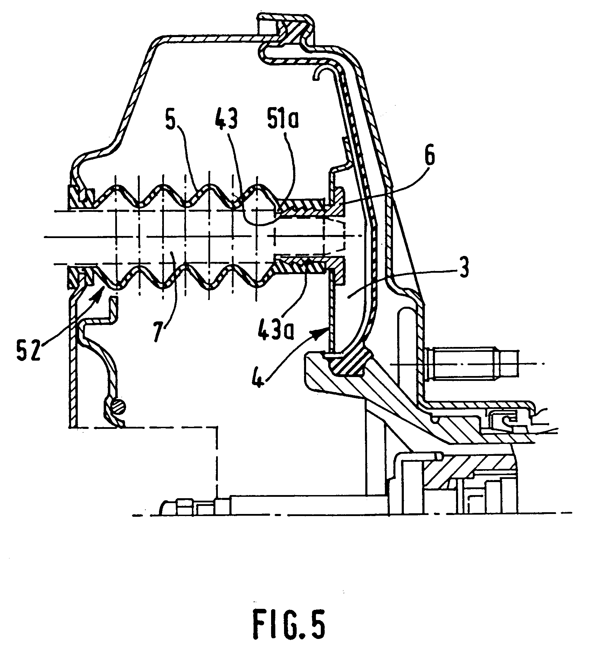

La figure 5 représente un troisième mode de réalisation de l'invention, dans lequel la pièce de maintien 6, de préférence en matière plastique, est solidaire de la paroi 4, traverse cette dernière, et forme la partie tubulaire 43a avec laquelle coopère, de façon étanche, le rebord annulaire interne 51a du conduit 5.

Dans tous les modes de réalisation décrits, le conduit 5 peut être aisément raccordé de façon étanche à l'orifice 43 au moyen d'un outil, tel que 7 sur la figure 5, qui est inséré dans ce conduit et actionné depuis l'extérieur.

## Revendications

1. Servomoteur à dépression, comprenant une enveloppe rigide (1) dont l'intérieur est partagé en au moins une première et une seconde chambres (2, 3) au moyen d'au moins une paroi (4), et un conduit tubulaire (5) traversant la première chambre (2), présentant une première extrémité (51) solidaire de la paroi, et servant à faire communiquer de façon étanche la seconde chambre (3) avec l'extérieur de l'enveloppe (1), le conduit (5) présentant, à sa première extrémité (51), un rebord annulaire interne (51a) qui en réduit le diamètre, la paroi présentant un orifice (43) constitué par une extrémité ouverte d'une partie tubulaire (43a), et le servomoteur comprenant une pièce de maintien (6) essentiellement constituée par un tube et coopérant avec le rebord interne (51a) du conduit pour assurer une liaison étanche entre la seconde chambre (3) et l'intérieur du conduit (5), caractérisé en ce que ladite partie tubulaire (43a) est formée par ladite paroi (4) et en ce que la pièce de maintien (6) présente un diamètre externe au plus égal au diamètre interne du conduit pris à distance du rebord annulaire (51a) de ce dernier, cette pièce de maintien présentant une première extrémité (61) dotée d'une élasticité radiale lui permettant de se maintenir sur la partie tubulaire de la paroi avec l'aide d'au moins une butée, et une seconde extrémité (62) coopérant avec la paroi pour enserrer le rebord interne (51a) du conduit et lui faire remplir la fonction d'un joint d'étanchéité.

2. Servomoteur selon la revendication 1, caractérisé en ce que la première extrémité (61) de la pièce de maintien (6) prend appui sur la partie tubulaire de la paroi au voisinage du bord de l'orifice.

3. Servomoteur selon la revendication 2 caractérisé en ce que la première extrémité (61) de la pièce de maintien (6) présente des découpes axiales (61a) propres à la rendre élastiquement expansible dans une direction radiale.

4. Servomoteur selon la revendication 2 ou 3, caractérisé en ce que la pièce de maintien (6) traverse par sa première extrémité (61) la première extrémité (51) du conduit et l'orifice (43) de la paroi, et en ce que la seconde extrémité de la pièce de maintien forme une collerette (62a) qui sollicite le rebord interne (51a) du conduit contre la face (41) de la paroi qui est tournée vers la première chambre (2).

5. Servomoteur selon la revendication 4, caractérisé en ce que ladite butée est formée sur la première extrémité (61) de la pièce de maintien (6) et adopte la forme d'une saillie (61b) coopérant avec le bord de l'orifice pour empêcher le retrait de cette pièce après son engagement dans l'orifice (43).

6. Servomoteur selon l'une quelconque des revendications 2 et 3, caractérisé en ce que la pièce de maintien (6) est enfilée sur la partie tubulaire de la paroi, la butée étant formée sur cette partie tubulaire.

7. Servomoteur selon l'une quelconque des revendications précédentes, caractérisé en ce que la partie tubulaire de la paroi se raccorde au reste de la paroi par un forme évasée.

8. Servomoteur selon l'une quelconque des revendications précédentes, caractérisé en ce que le conduit tubulaire adopte la forme d'un soufflet sensiblement rectiligne.

## Claims

1. Vacuum-type booster, comprising a rigid casing (1) the inside of which is divided into at least a first chamber and a second chamber (2, 3) by means of at least one wall (4), and a tubular pipe (5) passing through the first chamber (2), having a first end (51) secured to the wall and serving to cause the second chamber (3) to communicate in leaktight fashion with the outside of the casing (1), the pipe (5) having, at its first end (51), an internal annular rim (51a) which reduces its diameter, the wall having an orifice (43) consisting of an open end of a tubular part (43a), and the booster including a retaining piece (6) essentially consisting of a tube and interacting with the internal rim (51a) of the pipe to provide a leaktight connection between the second chamber (3) and the inside of the pipe (5), characterized in that the said tubular part (43a) is formed by the said wall (4) and in that the retaining piece (6) has an external diameter which is at most equal to the internal diameter of the pipe taken at a distance from the annular rim (51a) of the latter, this retaining piece having a first end (61) which is provided with radial elasticity allowing it to be retained on the tubular part of the wall with the aid of at least one stop piece, and a second end (62) interacting with the wall to trap the internal rim (51a) of the pipe and make it fulfil the function of a seal.

2. Booster according to Claim 1, characterized in that the first end (61) of the retaining piece (6) bears on the tubular part of the wall in the vicinity of the edge of the orifice.

3. Booster according to Claim 2, characterized in that the first end (61) of the retaining piece (6) has axial cutouts (61a) capable of making it elastically expandable in a radial direction.

4. Booster according to Claim 2 or 3, characterized in that the retaining piece (6) passes via its first end (61) through the first end (51) of the pipe and the orifice (43) in the wall, and in that the second end of the retaining piece forms a collar (62a) which urges the internal rim (51a) of the pipe against the face (41) of the wall which points towards the first chamber (2).

5. Booster according to Claim 4, characterized in that the said stop piece is formed on the first end (61) of the retaining piece (6) and adopts the shape of a projection (61b) interacting with the edge of the orifice to prevent this piece from being withdrawn after it has been engaged in the orifice (43).

6. Booster according to either one of Claims 2 and 3, characterized in that the retaining piece (6) is slipped over the tubular part of the wall, the stop piece being formed on this tubular part.

7. Booster according to any one of the preceding claims, characterized in that the tubular part of the wall is connected to the rest of the wall by a flared shape.

8. Booster according to any one of the preceding claims, characterized in that the tubular pipe adopts the shape of a substantially rectilinear gaiter.

## Patentansprüche

1. Unterdruck-Servomotor mit einem starren Gehäuse (1), dessen Inneres mittels wenigstens einer Wand (4) in eine erste und eine zweite Kammer (2, 3) unterteilt ist, und einer rohrförmigen Leitung (5), welche die erste Kammer (2) durchquert, ein mit der Wand fest verbundenes erstes Ende (51) aufweist und dazu dient, die zweite Kammer (3) in dichter Weise mit dem Außenraum des Gehäuses (1) zu verbinden, wobei die Leitung (5) an ihrem ersten Ende (51) einen ringförmigen Innenrand (51a) aufweist, der ihren Durchmesser vermindert, wobei die Wand eine Öffnung (43) aufweist, die durch ein offenes Ende eines rohrförmigen Abschnittes (43a) gebildet ist, und wobei der Servomotor ein Halteteil (6) aufweist, das im wesentlichen durch ein Rohr gebildet ist und mit dem Innenrand (51a) der Leitung zusammenwirkt, um eine dichte Verbindung zwischen der zweiten Kammer (3) und dem Inneren der Leitung (5) zu gewährleisten, dadurch gekennzeichnet, daß der rohrförmige Abschnitt (43a) durch die Wand (4) gebildet ist und daß das Halteteil (6) einen Außendurchmesser aufweist, der höchstens gleich dem Innendurchmesser der Leitung in einem Abstand von dem ringförmigen Rand (51a) von dieser ist, wobei das Halteteil ein erstes Ende (61) aufweist, das eine radiale Elastizität aufweist, wodurch es sich an dem rohrförmigen Abschnitt der Wand mittels wenigstens eines Anschlages halten kann, sowie ein zweites Ende (62), das mit der Wand zusammenwirkt, um den Innenrand (51a) der Leitung einzuzwängen und ihm die Funktion einer Dichtung zukommen zu lassen.

2. Servomotor nach Anspruch 1, dadurch gekennzeichnet, daß das erste Ende (61) des Haltetelis (6) an dem rohrförmigen Abschnitt der Wand in der Nähe des Randes der Öffnung anliegt.

3. Servomotor nach Anspruch 2, dadurch gekennzeichnet, daß das erste Ende (61) des Halteteils (6) axiale Einschnitte (61a) aufweist, die es in einer radialen Richtung elastisch aufweitbar machen.

4. Servomotor nach Anspruch 2 oder Anspruch 3, dadurch gekennzeichnet, daß das Halteteil (6) mit seinem ersten Ende (61) das erste Ende (51) der Leitung sowie die Öffnung (43) der Wand durchquert und daß das zweite Ende des Halteteils einen Bund (62a) bildet, der den Innenrand (51a) der Leitung gegen die Seite (41) der Wand beaufschlagt, die der ersten Kammer (2) zugewandt ist.

5. Servomotor nach Anspruch 4, dadurch gekennzeichnet, daß der Anschlag auf dem ersten Ende (61) des Halteteils (6) gebildet ist und die Form eines Vorsprungs (61b) hat, der mit dem Rand der Öffnung zusammenwirkt, um das Herausziehen dieses Teils nach seinem Eingreifen in die Öffnung (43) zu verhindern.

6. Servomotor nach einem der Ansprüche 2 und 3, dadurch gekennzeichnet, daß das Halteteil (6) auf den rohrförmigen Abschnitt der Wand aufgeschoben ist, wobei der Anschlag auf diesem rohrförmigen Abschnitt gebildet ist.

7. Servomotor nach einem der vorhergehenden Ansprüche, dadurch gekennzeichnet, daß der rohrförmige Abschnitt der Wand sich an den Rest der Wand mit einer erweiterten Form anschließt.

8. Servomotor nach einem der vorhergehenden Ansprüche, dadurch gekennzeichnet, daß die rohrförmige Leitung die Form eines im wesentlichen geradlinigen Balges hat.
